Europäisches Patentamt

European Patent Office

Office européen des brevets

(11) Numéro de publication: **0 119 132**
**A1**

## (12) DEMANDE DE BREVET EUROPEEN

(21) Numéro de dépôt: **84400436.6**

(22) Date de dépôt: **05.03.84**

(51) Int. Cl.³: **H 04 N 5/91**

(30) Priorité: **07.03.83 FR 8303713**

(43) Date de publication de la demande:
**19.09.84 Bulletin 84/38**

(84) Etats contractants désignés:
**AT BE CH DE GB IT LI LU NL SE**

(71) Demandeur: **S.A. DEMIA**
**3 boulevard Pasteur**
**Luxembourg(LU)**

(84) Etats contractants désignés:
**BE CH DE GB IT LI NL SE AT**

(71) Demandeur: **SODECOM**
**15 bis rue de Marignan**
**F-75008 Paris(FR)**

(84) Etats contractants désignés:
**LU**

(72) Inventeur: **Mikrut, Antoine**
**37 rue Reuilly**
**F-75012 Paris(FR)**

(74) Mandataire: **Beauchamps, Georges et al,**
**Cabinet Z.Weinstein 20, avenue de Friedland**
**F-75008 Paris(FR)**

(54) **Procédé et système de traitement de signaux de télévision en couleur, du type SECAM, comportant un dispositif anticopie.**

(57) La présente invention concerne un procédé et système de traitement de signaux de télévision en couleur.

L'invention est caractérisée en ce qu'elle comprend un dispositif anti-copie (6) adapté pour insérer des signaux anticopie dans la partie d'information à transmettre à un dispositif d'enregistrement, le dispositif anti-copie comprenant entre autre un moyen d'introduction (61), une mémoire morte (62).

L'invention trouve application dans le domaine des magnétoscopes.

FIG. 2

- 1 -

Procédé et système de traitement de signaux de télévision en couleur, du type SECAM, comportant un dispositif anti-copie

La présente invention concerne un procédé de traitement de signaux de télévision en couleur, notamment du type SECAM, en vue de leur application à un dispositif récepteur tel qu'un dispositif d'enregistrement, par exemple une cassette à bande magnétique, et un système pour la mise en oeuvre d'un tel procédé.

Il est connu que les enregistrements par exemple sur une bande magnétique sont faciles à copier. Une personne en possession de l'enregistrement, par exemple loué, peut en faire une ou plusieurs copies, sans que cela soit contrôlable. D'autre part, la personne peut remplacer la bande magnétique contenant l'enregistrement original par une copie sans que le propriétaire de l'enregistrement original se rende compte de cet acte de substitution.

La présente invention a pour objectif de proposer une solution à ce problème.

A cette fin, le procédé selon la présente invention est caractérisé en ce que l'on insère des signaux anti-copie dans la partie d'informations des signaux de chrominance $D_R$ et $D_B$ et de luminance Y à transmettre au dispositif d'enregistrement, qui n'est pas destinée à la visualisation lors d'une reproduction.

Suivant une caractéristique avantageuse de l'invention, on remplace dans l'information à transmettre au moins une partie du signal d'identification destiné à assurer le fonctionnement correct du commutateur d'aiguillage des signaux de chrominance $D_R$, $D_B$ dans le dispositif d'enregistrement, et du type SECAM, par un signal ayant une fréquence en dehors de la bande de fréquence passante prévue dans le dispositif d'enregistrement, de façon qu'un deuxième enregistrement fait à partir du premier enregistrement donne lieu à une reproduction de mauvaise qualité.

Suivant une autre caractéristique de l'invention, les signaux anti-copie précités constituent un code permettant une identification du premier enregistrement comme enregistrement original.

Suivant encore une autre caractéristique avantageuse du procédé selon la présente invention, on prévoit dans chaque séquence des signaux de chrominance et du signal de luminance un top de synchronisation et compose ce top d'une salve d'oscillations ayant une fréquence en dehors de la bande de fréquence passante des voies de signaux correspondantes dans le dispositif récepteur, de façon que le synchronisme des signaux de synchronisation et de luminance ne soit plus assuré dans un deuxième enregistrement constituant une copie d'un premier enregistrement et dans les reproductions faites à partir de ces enregistrements de copies.

Le système pour la mise en oeuvre du procédé proposé par l'invention est caractérisé en ce qu'il comprend des moyens d'introduction des codes anti-copie tel qu'un clavier, des moyens adaptés pour produire à partir du code une série de salves d'oscillations appropriée et des moyens d'insertion de ces salves à la place d'une partie d'informations normalement transmises au dispositif récepteur.

L'invention sera mieux comprise et d'autres buts, caractéristiques, détails et avantages de celle-ci apparaîtront plus clairement au cours de la description explicative qui va suivre faite en référence aux figures annexées données uniquement à titre d'exemple illustrant un mode de réalisation de l'invention et dans lesquels :

La figure 1 montre sous forme d'un schéma bloc un système de traitement selon la présente invention ;

La figure 2 illustre sous forme d'un schéma bloc le principe d'un dispositif anti-copie selon la présente invention ;

La figure 3 montre schématiquement le signal d'identification de contrôle de fonctionnement du commutateur électronique dans un récepteur SECAM et les signaux utilisés par l'invention pour déterminer la période de présence de ce signal d'identification, et

La figure 4 illustre l'emplacement des tops de synchronisation formés par des salves d'oscillations anti-copie.

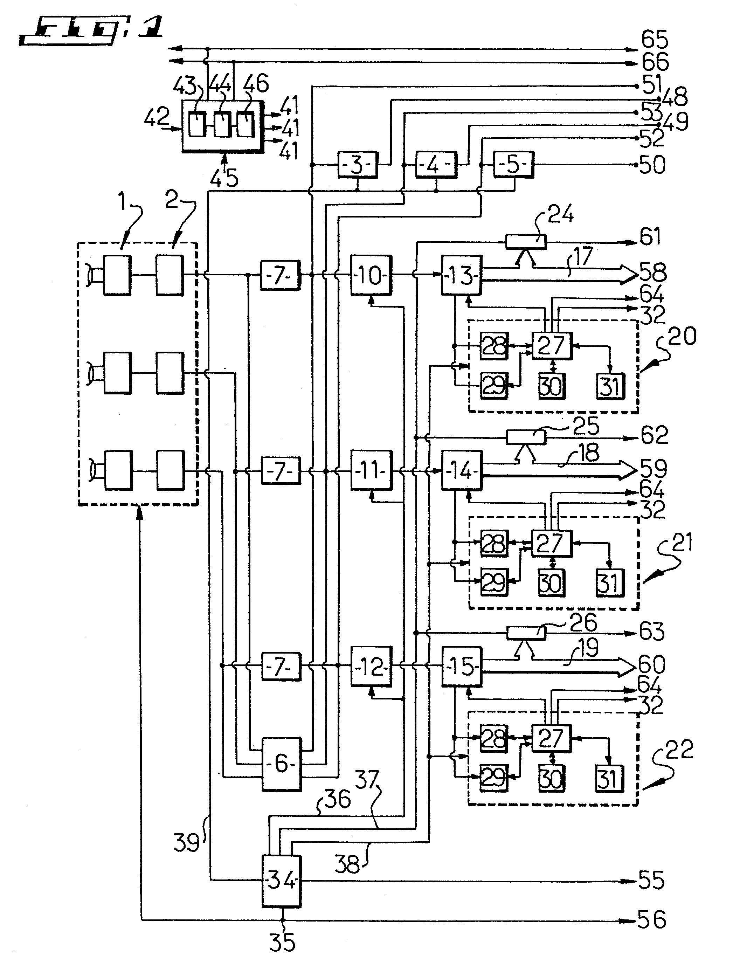

Dans le schéma représenté à la figure 1, on reconnaît en 1 un dispositif de prise de vue d'une caméra de télévision couleur et en 2 le dispositif des trois matrices destinées à produire à leur sortie les signaux de chrominance, c'est-à-dire de différence de couleur $D_R = E'_R - E'_Y$, $D_B = E'_B - E'_Y$ et le signal de luminance $E'_Y$ du type SECAM.

Le système de traitement selon la présente invention comporte trois oscillateurs 3, 4 et 5 avantageusement à quartz qui sont contrôlés en tension. Les oscillateurs 3 et 5 sont destinés à produire respectivement des fréquences sous-porteuses pour les signaux de chrominance $D_R$ et $D_B$, tandis que l'oscillateur 4 engendre la porteuse du signal de luminance. Selon l'invention les oscillateurs 3 et 5 sont adaptés pour produire des sous-porteuses ayant des fréquences égales à un multiple des sous-porteuses classiques de 4,406 et 4,25 MHz du système SECAM. Le rapport des sous-porteuses engendrées par les oscillateurs 3 et 5 est identique au rapport des sous-porteuses classiques susmentionnées, pour assurer la compatibilité du système selon l'invention avec le système classique. Bien entendu, les sous-porteuses sont modulées en fréquence par les signaux $D_R$ et $D_B$.

Grâce à l'utilisation de sous-porteuses de chrominance ou de couleur ayant une fréquence multiple par rapport aux sous-porteuses classiques, la bande passante de transmission de données est suffisamment large pour assurer la bonne définition des couleurs et pour permettre la transmission d'un ou de plusieurs mots binaires codés par exemple selon le mode "NRZ" (non retour à zéro), connu en soi et appliqué par exemple au système télétexte ANTIOPE. De plus, le traitement ultérieur appliqué aux sous-porteuxes modulées en fréquence se limite à des opérations de division de fréquence.

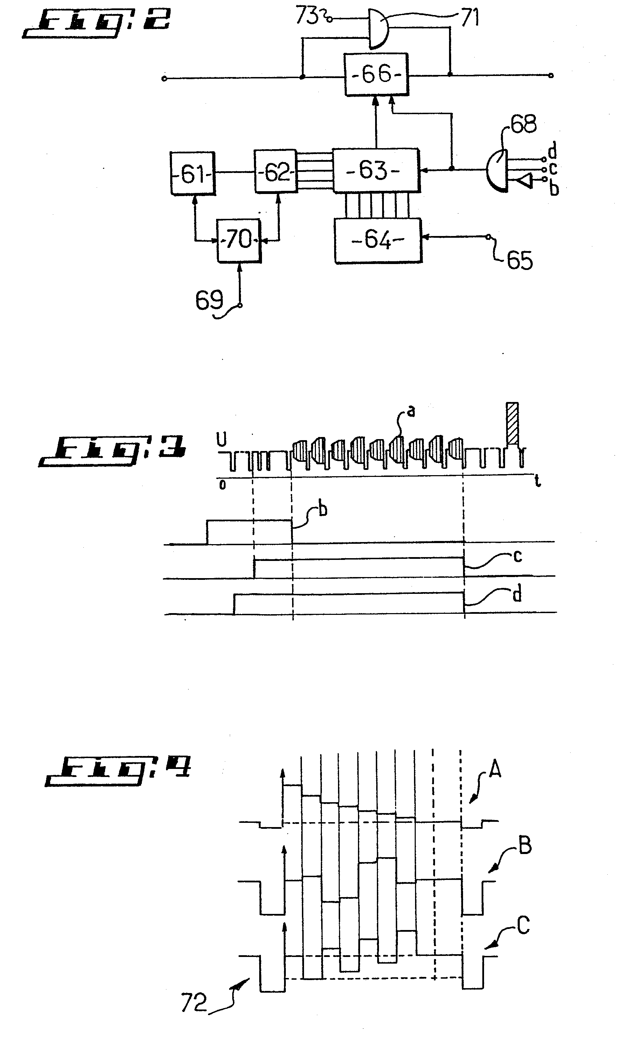

Comme le montre la figure 2, le système de traitement proposé par l'invention comprend un dispositif anti-copie 6. Celui-ci comporte essentiellement un clavier 61 permettant le choix d'un top prédéterminé par l'actionnement par exemple d'une touche ou de plusieurs touches, une mémoire morte 62 ayant pour fonction de transformer l'information introduite à l'aide du clavier en un signal numérique présenté par exemple en parallèle aux sorties de la mémoire. Ces sorties sont reliées à un groupe d'entrées parallèles d'un multiplexeur 63 qui reçoit aux entrées d'un second groupe les sorties d'un diviseur de tension 64. Celui-ci produit à partir d'une fréquence d'horloge indiquée en 65 soit la même fréquence à toutes ces sorties soit des fréquences différentes et spécifiques de chacune de ces sorties.

Le multiplexeur produit à sa sortie une séquence de salves d'oscillations de la même fréquence ou de fréquences différentes, qui correspond au signal numérique à la sortie de la mémoire morte 62. Cette suite de salves d'oscillations est appliquée à un dispositif 66 qui est situé dans la voie des signaux provenant de la caméra 1, 2. Le dispositif 66 a pour fonction d'inhiber la transmission d'au moins une partie du signal d'identification destinée à contrôler la phase du commutateur électronique de dispositif récepteur du type SECAM classique.

Le dispositif 66 et le multiplexeur sont commandés par un organe formant porte 68. Cette porte a trois entrées auxquelles sont appliquées les signaux b, c et d représentés à la figure 3. Ces signaux sont produits dans le codeur du type SECAM et représentent respectivement la porte des fréquences ligne double, l'emplacement d'identification trame et ligne et la porte d'identification. En _a_, on a représenté à la figure 3 de façon schématique le signal d'identification de contrôle du commutateur électronique que remplace au moins en partie les salves d'oscillation anti-copies. On constate que la période de présence du signal d'identification _a_ se définit par le fait que les signaux c et d sont à l'état "1" et le signal en b est à l'état "0". En inversant le signal b on peut donc déterminer la période de présence du signal d'identification _a_ à l'aide d'une porte ET comme cela est fait à la figure 2.

- 6 -

Concernant le fonctionnement des moyens qui viennent d'être décrits, il est à noter que les oscillations anti-copie présentent une fréquence située en dehors de la bande passante réservée au signal d'identification prévu dans les récepteurs du type SECAM classique. Il est possible d'enregistrer les signaux produits par la caméra 1 et 2 une première fois par exemple sur une bande magnétique. Mais si on voulait faire de ce premier enregistrement un second enregistrement, c'est-à-dire une copie, la qualité de cette dernière serait insuffisante et donnerait lieu à une reproduction de mauvaise qualité car lors de la reproduction à partir de la copie le fonctionnement correct du commutateur SECAM ne serait plus assuré. Concernant la fréquence des oscillations anti-copie, celles-ci pourraient avantageusement avoir la fréquence des oscillations produites par les oscillateurs de sous-porteuses et de porteuses 3, 4 et 5 dont la fréquence est égale à un multiple de la fréquence des sous-porteuses SECAM classiques.

Il ressort des remarques précédentes que l'insertion d'un code anti-copie formé par des salves d'oscillations ayant une fréquence en dehors de la bande passante des récepteurs classiques, dans les séquences des signaux fournies par la caméra ou toute autre source de signaux de télévision couleur contrarie toute activité d'enregistrement frauduleuse. D'autre part, la présence des signaux de code anti-copie dans les séquences de signaux d'origine et ainsi sur le support d'enregistrement d'origine permet de s'assurer que cet enregistrement est un original et non pas une copie.

Il est à encore à noter que le dispositif anti-copie selon la présente invention est adapté pour permettre sa connexion à un dispositif externe. A cette fin, on a prévu une entrée 69 associée à une unité de traitement 70 coopérant et agissant, le cas échéant, avec le clavier 61 et la mémoire morte 62. Il est encore à noter, que le dispositif anti-copie permet également d'inscrire dans des trames des numéros qui permettent d'identifier celle-ci.

Suivant la figure 2, le dispositif anti-copie 6 comprend un autre organe ou circuit 71 permettant d'accomplir une fonction anti-copie. Comme le montre la figure 4, qui constitue un oscillogramme d'une même ligne qui correspond à la mire de barres de 75 % d'amplitude pour les couleurs blanc, jaune bleuté en vert, vert pourpre, rouge, bleu et noir (de gauche à droite) chaque signal en A, B et C est précédé par un top de synchronisation 72 qui descend en dessous des niveaux minimum possibles de chaque signal. Or, l'organe 71 est adapté pour former les tops de synchronisation 72 d'une salve d'oscillations d'une fréquence qui se trouve en dehors de la bande de fréquence passante des dispositifs récepteurs SECAM classiques. Ces oscillations pourraient être les sous-porteuses produites par les oscillateurs 3, 5 à la fréquence d'un multiple des fréquences sous-porteuses SECAM classiques. L'organe 72 pourrait être constitué par tout circuit approprié pouvant par exemple exécuter la fonction d'une porte ET à deux entrées prévue respectivement pour la réception d'une porte de synchronisation et en 73 de salves d'oscillations.

Dans ce dernier cas encore, du fait que les oscillations anti-copie se trouvent en dehors de la bande passante du dispositif récepteur, les copies faites à partir d'un premier enregistrement ne permettraient plus une reproduction de bonne qualité en raison d'une perte de synchronisme augmentant rapidement de copie en copie.

Le système de traitement représenté comprend en outre trois convertisseurs analogiques-numériques 10, 11, 12 chacun étant destiné au traitement d'un des trois

signaux $D_R$, $D_B$ et Y'. Chaque convertisseur est relié à la sortie d'une des trois matrices de la caméra de télévision soit au moyen du dispositif 7 soit par l'intermédiaire des dispositifs anti-copie 6. En aval de chaque convertisseur 10 à 12 on constate la présence d'un circuit d'aiguillage respectivement 13, 14 et 15 reliant le convertisseur auquel il est associé à un bus de données de sortie 17, 18 et 19 soit directement soit par l'intermédiaire d'un dispositif d'élimination de parasites 20, 21 ou 22. Etant donné que sur chaque bus les signaux numériques en code binaire produits par le convertisseur analogique-numérique 10, 11 ou 12 correspondant sont présents suivant une constellation en parallèle, on prévoit pour chacun des bus de données un convertisseur parallèle-série 24, 25 ou 26 destiné à convertir la constellation en parallèle en une constellation de signaux en série.

Chacun des dispositifs d'élimination de parasites 20, 21 et 22 comprend une unité de traitement 27 telle qu'un micro-ordinateur ou microprocesseur, deux mémoires vives 28, 29 destinées à stocker respectivement la trame entière qui est en train d'être produite par la caméra et la trame précédente, ainsi qu'une mémoire morte 30 contenant la routine pour l'unité de traitement. Cette dernière peut également être programmée pour assurer la production d'une tension continue d'alimentation très stable, à l'aide de moyens convertisseurs numériques - analogiques 31 à partir d'un chiffre binaire préalablement défini. Cette tension continue peut servir de tension de référence pour le système d'alimentation des différents éléments du dispositif de traitement proposé par l'invention et notamment pour la production de l'alimentation des oscillateurs 3, 4 et 5, à la manière décrite. La borne de sortie de cette tension est appliquée en 32.

Le dispositif d'élimination de parasites peut également être pourvu de moyens connus en soi permettant la correction d'erreurs contenues dans les signaux numériques portant sur plusieurs éléments binaires par exemple en assurant la présence d'un nombre prédéterminé d'états binaires dans chaque signal numérique. Le dispositif de traitement 27 permet l'accomplissement de cette fonction connue en soi. L'unité de traitement peut encore être adaptée pour produire un signal indicateur d'absence d'erreur dans les signaux numériques.

Concernant la coopération des convertisseurs analogique-numérique 10 à 12 et du dispositif anti-copie, il est à noter que les codes anti-copie pourraient déjà être insérés dans la séquence de signaux de chrominance et de luminance en forme numérique. Dans ce cas, le dispositif anti-copie 6 commanderait l'inhibition des convertisseurs pendant les intervalles de temps correspondants, c'est-à-dire provoquerait le libre passage des parties de séquence occupés par ce code, à travers les convertisseurs.

Pour assurer un parfait synchronisme du fonctionnement des différents éléments du système proposé par l'invention, celui-ci comprend un oscillateur à quartz 34 constituant un générateur de signaux de haute fréquence, par exemple de l'ordre de 100 MHz. Cet oscillateur accomplit la fonction d'une horloge générale. Comme le montre la figure, les signaux de synchronisation de ligne et de trame et de demi-ligne disponibles en 35 sont dérivés de l'horloge générale. Les convertisseurs analogique - numérique 13 à 15, les convertisseurs parallèles-série 24 à 26 et les dispositifs d'alimentation de parasites 20 à 22 sont également asservis à l'horloge. Les conducteurs des signaux d'horloge pour la commande de ces éléments sont indiqués respectivement en 36, 37 et 38. En 39, l'horloge générale 34 fournit les signaux de synchronisation    des oscillateurs de sous-porteuse et de porteuse 3, 4, 5. Le synchronisme de ces oscillateurs est ainsi garanti par le fait que les signaux de synchronisation sont dérivés du même signal de haute fréquence. Il est à souligner que tous les signaux de synchronisation et de référence sont obtenus par division de la fréquence du signal d'horloge, ce qui garantit une stabilité parfaite des signaux ainsi obtenus et un synchronisme parfait de fréquence et de phase des oscillateurs 3, 4 et 5, et des signaux, c'est-à-dire de leur front avant, et ainsi de toutes les opérations effectuées par le système de traitement selon la présente invention. Pour assurer la stabilité de la fréquence de l'oscillateur d'horloge 34, par exemple pour empêcher toute dérivation thermique, cet oscillateur est monté dans une boucle de stabilisation (non représentée), comportant également les oscillateurs 3, 4 et 5.

Le dispositif d'alimentation en tension continue, désigné par le chiffre de référence 40 peut également être conçu pour produire des tensions d'alimentation extrêmement stables pour les oscillateurs de sous-porteuse et de porteuse 3, 4 et 5. Ces tensions sont disponibles aux trois bornes de sortie 41 du dispositif d'alimentation. Comme cela est schématiquement indiqué sur la figure, les moyens générateurs des tensions d'alimentation des oscillateurs sont avantageusement dérivés du signal d'horloge de haute fréquence produit par l'horloge générale 34. Le dispositif d'alimentation 40 reçoit en 42 ce signal d'horloge de par exemple 100 MHz. Dans le dispositif 40 ce signal est divisé par un diviseur de fréquence schématiquement indiqué en 43 qui en produit un signal de par exemple 1 MHz. Celui-ci est appliqué à un amplificateur saturé 44 fonctionnant en régime de tout ou rien et alimenté de son côté par la tension continue très stable produite en 32 par l'un des dispositifs d'élimination de parasites 20, 21 ou 22. Un convertisseur 45 transforme le signal de sortie de l'amplificateur en une tension continue disponible aux sorties 41.
Cette tension est parfaitement stable du fait qu'elle
est dérivée de la fréquence horloge par division de
fréquence, ce qui garantit déjà un haut degré de stabilité et de la tension très stable produite par les dispositifs d'élimination de parasites à partir d'un chiffre binaire. L'amplitude de la tension de sortie est
ainsi rigoureusement contrôlable. Il est encore à noter
que le dispositif d'alimentation 40 est galvaniquement
séparé du secteur par l'intermédiaire d'un transformateur (non représenté).

En se reportant à la figure 1, on constate que le système
de traitement proposé par l'invention comporte aux
bornes de sortie 48 à 50 des signaux de sortie des
oscillateurs 3, 4 et 5, c'est-à-dire des sous-porteuses
modulées par les signaux de chrominance et de la porteuse modulée par le signal de luminance. Des bornes de
sortie 51, 50 et 52 sont prévues auxquelles peuvent
être prélevés les signaux de chrominance et de luminance
tels qu'ils ont été produits par la caméra de télévision en couleur. Le système comporte en outre des bornes
de sortie 55, 56 auxquelles le signal d'horloge haute
fréquence, produit par l'oscillateur 34 et les signaux
de synchronisation de ligne et de trame et de demi-ligne
peuvent être prélevés. Les symboles de référence 58 à
60 indiquent les bornes de sortie des bus de données 17
à 19 tandis qu'aux bornes 61 à 63 sont disponibles les
signaux numériques en constellation en série. Le signal
d'absence d'erreur est présent à la sortie 64. Les
bornes 65 et 66 sont associées au dispositif d'alimentation 40 et désignent la masse et le potentiel d'alimentation.

Toutes les sorties susmentionnées ou au moins une partie
essentielle de celles-ci peuvent être reliées à une prise du genre multibroche connectable à un dispositif récepteur tel que par exemple un magnétoscope, appareil de télévision en couleur standard, moniteur pour contrôle visuel et analogue. En prévoyant également une prise par exemple du type multibroche au côté entrée, le système peut constituer une unité autonome susceptible d'être montée entre une caméra de télévision en couleur et un dispositif récepteur approprié. Mais il serait également possible d'insérer ce système avec la caméra et le dispositif récepteur tel qu'un magnétoscope dans une même boîte pour former un genre de télécinéma, un ensemble de copies de film ou de documents quelconques.

Le fonctionnement du système selon l'invention ressort immédiatement de la description qui vient d'être faite et de la figure 1. Il n'est donc pas nécessaire de le décrire, à l'exception du fonctionnement des dispositifs d'élimination des parasites. Chacun de ces dispositifs fonctionne de la manière suivante :

Pour éliminer les parasites, l'unité de traitement 27, sous la commande de la routine stockée dans la mémoire morte 30 compare chaque trame à la trame précédente. Ces trames sont stockées respectivement dans les mémoires vives 28, 29. A la suite de cette opération de comparaison, tous les éléments d'image qui sont communs aux deux trames seront conservés. Par contre les éléments non identiques seront éliminés. Il est à noter que les deux trames sont décalées dans le temps de 20 milli-secondes. Les éléments représentatifs de parasites ne seront donc généralement plus les mêmes dans les deux trames. Par une programmation appropriée relativement simple, l'unité de traitement peut être adaptée pour distinguer une différence dans les deux trames, produites par un objet qui se déplace devant la caméra, d'une différence occasionnée par des parasites. En effet, l'objet en déplacement conserve son contour général, c'est-à-dire les éléments d'image qui le représentent conservent sensiblement leurs formes. Ils ont seulement changé de place sur les deux trames. Cette non-altération de la forme générale des éléments d'image et représentative d'un objet en déplacement, d'une trame à la trame suivante, permet de la distinguer des parasites qui sont aléatoires et donc en principe toujours différents d'une trame à l'autre. On comprend aisément que le dispositif d'élimination de parasites peut être rendu encore plus sophistiqué et sensible à des paramètres particuliers en le reliant à un calculateur externe programmé en conséquence.

Bien entendu le système selon la présente invention, tel qu'il est représenté sur la figure 1 et tel qu'il vient d'être décrit peut être modifié de diverses manières sans sortir du cadre de la présente invention. Ainsi les signaux de chrominance et de luminance n'ont pas besoin d'être pris à la sortie de la caméra. Ils peuvent être issus de tout autre dispositif émetteur. On pourrait également envisager d'appliquer aux oscillateurs générateurs des sous-porteuses 3 et 5 non pas les signaux de chrominance dans leur version analogique, mais dans leur forme numérique obtenue aux sorties des convertisseurs analogiques-numériques 10 à 13 et le cas échéant après le traitement par les dispositifs d'élimination de parasites. On obtiendrait de cette manière des signaux de sortie débarrassés de parasites aléatoires. Il est encore une fois à souligner que le choix des fréquences de sous-porteuses devrait être fait de telle manière que toutes les informations et signaux dérivés puissent être transmis et traités de façon qu'ils présentent une haute définition et soient conservés dans l'état d'origine sans subir pratiquement aucune détérioration. Le système pourrait permettre la transmission des signaux numériques de tout code approprié, par exemple des signaux du type "N.R.Z." (non retour à zéro), tels que les signaux appliqués pour le système ANTIOPE.

Revendications

1. Procédé de traitement de signaux de télévision en couleur, notamment du type SECAM, en vue de leur transmission à un dispositif récepteur, en particulier un dispositif d'enregistrement, tel qu'une bande magnétique ou analogue, caractérisé en ce que l'on insère des signaux anti-copie dans la partie d'informations des signaux de chrominance $D_R$, $D_B$ et de luminance Y à transmettre au dispositif d'enregistrement, qui n'est pas destinée à la visualisation lors d'une reproduction.

2. Procédé selon la revendication 1, caractérisé en ce que l'on remplace dans l'information à transmettre au moins une partie du signal d'identification destiné à assurer le fonctionnement correct du commutateur d'aiguillage des signaux de chrominance $D_R$, $D_B$ dans le dispositif d'enregistrement, et du type SECAM, par un signal ayant une fréquence en dehors de la bande de fréquence passante prévue dans le dispositif d'enregistrement, de façon qu'un deuxième enregistrement fait à partir du premier enregistrement donne lieu à une reproduction de mauvaise qualité.

3. Procédé selon la revendication 1 ou 2, caractérisé en ce que les signaux anti-copie précités constituent un code permettant une identification du premier enregistrement comme enregistrement original.

4. Procédé selon l'une des revendications précédentes, caractérisé en ce qu'on prévoit dans chaque séquence des signaux de chrominance et du signal de luminance un top de synchronisation et compose ce top d'une salve d'oscillations ayant une fréquence en dehors de la bande de fréquence passante des voies de signaux correspondantes dans le dispositif récepteur, de façon que le synchronisme des signaux de synchronisation et de luminance ne soit plus assuré dans un deuxième enregistrement constituant une copie d'un premier enregistrement et dans les reproductions faites à partir de ces enregistrements de copie.

5. Système pour la mise en oeuvre du procédé selon les revendications 1 à 4, caractérisé en ce qu'il comprend un dispositif anti-copie (6) adapté pour insérer des signaux anti-copie dans la partie d'informations à transmettre au dispositif d'enregistrement, qui n'est pas destinée à la visualisation lors d'une reproduction.

6. Système selon la revendication 5, caractérisé en ce que le dispositif anti-copie (6) comprend un moyen d'introduction (61) et une mémoire morte (62), un moyen (63, 64) adapté pour engendrer une série de salves d'oscillations à partir du code et un moyen de coïncidence tel qu'un circuit logique 72 pour l'insertion des salves d'oscillations anti-copie dans la séquence d'informations.

7. Système selon la revendication 6, caractérisé en ce que le moyen générateur des salves d'oscillations comprend un multiplexeur (63) dont un groupe d'entrées est relié aux sorties de la mémoire morte (62) et un diviseur de fréquence (64) dont les sorties sont reliées à un deuxième groupe d'entrées du multiplexeur, le diviseur de fréquence produisant à toutes ses sorties la même fréquence ou des fréquences différentes.

8. Système selon la revendication 5, caractérisé en ce que le dispositif anti-copie (6) peut être relié à une source de signaux du code externe.

9. Système selon l'une des revendications 5 à 8, caractérisé en ce que le dispositif anti-copie (6) est adapté pour permettre l'insertion d'un code ou l'insertion dans au moins une trame d'un code d'identification de la
trame.

10. Système selon l'une des revendications 5 à 9, caractérisé en ce que le code anti-copie peut être un code de
vérification de l'enregistrement d'un original et non
pas d'une copie.

11. Système selon l'une des revendications 1 à 10, caractérisé en ce qu'il comprend des moyens pour produire
au début des signaux de chrominance et de luminance de
chaque ligne un top de synchronisation dont le niveau
est inférieur à la valeur minimum des signaux de chrominance et de luminance et en ce que le dispositif anti -
copie (6) comporte des moyens pour remplacer les tops
de synchronisation par une salve d'oscillations anti-
copie.

12. Système selon l'une des revendications 5 à 11,
caractérisé en ce qu'il comprend des convertisseurs
analogique-numérique (10-12) montés en aval du dispositif anti-copie (6), le cas échéant complétés par des
dispositifs d'élimination (20-22) de parasites et
d'erreurs.

13. Système selon l'une des revendications précédentes,
caractérisé en ce qu'il comporte des oscillateurs
générateurs (3, 4, 5) de sous-porteuses de chrominance
et de luminance présentant des séquences constituant des
multiples de sous-porteuses SECAM classiques et en ce
que les oscillations anti-copies présentent avantageusement la fréquence de ces sous-porteuses.

Fig. 1

Fig. 2

Fig. 3

Fig. 4

Office européen
des brevets

**RAPPORT DE RECHERCHE EUROPEENNE**

EP  84 40 0436

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-4 163 253  (MORIO) <br> * Abrégé * | 1 | H 04 N    5/91 |
| | --- | | |
| X | GB-A-2 086 641  (NIPPON VICTOR K.K.) <br> * Abrégé * | 1 | |
| | --- | | |
| A | US-A-4 086 634  (COOK) <br> * Colonne 2, lignes 21-54 * | 3 | |
| | --- | | |
| A | GB-A-1 525 292  (EMI LTD.) <br> * Page  1, lignes 37-76; page 2, lignes  62-93;  page  3,  lignes 91-102 * | 3 | |
| | ----- | | |

| DOMAINES TECHNIQUES RECHERCHES (Int. Cl. ³) |
|---|
| H 04 N    5 <br> G 11 B    23 <br> H 04 N    9 |

Le présent rapport de recherche a été établi pour toutes les revendications

| Lieu de la recherche <br> LA HAYE | Date d'achèvement de la recherche <br> 04-06-1984 | Examinateur <br> VERSCHELDEN J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82